(19) Europäisches Patentamt / European Patent Office / Office européen des brevets

(11) **EP 3 361 656 B1**

(12) **EUROPÄISCHE PATENTSCHRIFT**

(45) Veröffentlichungstag und Bekanntmachung des Hinweises auf die Patenterteilung:
**23.09.2020 Patentblatt 2020/39**

(51) Int Cl.:
*H04J 14/02* (2006.01)     *H04B 10/27* (2013.01)
*H04L 12/825* (2013.01)     *H04L 12/811* (2013.01)

(21) Anmeldenummer: **17155505.5**

(22) Anmeldetag: **09.02.2017**

(54) **EINSTELLUNG DER DATENÜBERTRAGUNGSRATE FÜR EINEN ÜBERTRAGUNGSPFAD INNERHALB EINES OPTISCHEN KERNNETZES**

DATA TRANSMISSION RATE ADJUSTMENT FOR A TRANSMISSION PATH WITHIN AN OPTICAL CORE NETWORK

RÉGLAGE DU DÉBIT DE TRANSMISSION DE DONNÉES POUR UN CHEMIN DE TRANSMISSION DANS UN RÉSEAU CENTRAL OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.08.2018 Patentblatt 2018/33**

(73) Patentinhaber: **Deutsche Telekom AG**
**53113 Bonn (DE)**

(72) Erfinder:
• **WISSEL, Felix**
**64372 Ober-Ramstadt (DE)**
• **SCHEFFCZYK, York**
**28357 Bremen (DE)**

(74) Vertreter: **Brandt & Nern Patentanwälte**
**Kekuléstrasse 2-4**
**12489 Berlin (DE)**

(56) Entgegenhaltungen:
WO-A1-95/28777

• GWANG-HYUN GHO ET AL: "Rate-Adaptive Modulation and Coding for Optical Fiber Transmission Systems", JOURNAL OF LIGHTWAVE TECHNOLOGY, IEEE SERVICE CENTER, NEW YORK, NY, US, Bd. 30, Nr. 12, 1. Juni 2012 (2012-06-01), Seiten 1818-1828, XP011441016, ISSN: 0733-8724, DOI: 10.1109/JLT.2012.2189435
• Marco Quagliotti ET AL: "IST IP IDEALIST D1.6 -Lessons and conclusions from elastic optical networks", , 13. November 2015 (2015-11-13), Seiten 1-96, XP055406150, Gefunden im Internet: URL:http://cordis.europa.eu/docs/projects/cnect/9/317999/080/deliverables/001-D16Ares20155327570.pdf [gefunden am 2017-09-13]
• GUNKEL MATTHIAS ET AL: "Flexrate technology for multi-layer interworking: The practical benefit of fine-granular rate adaptability in aggregation networks", 2015 INTERNATIONAL CONFERENCE ON PHOTONICS IN SWITCHING (PS), IEEE, 22 September 2015 (2015-09-22), pages 285-287, XP032799085, DOI: 10.1109/PS.2015.7329028 [retrieved on 2015-11-13]

EP 3 361 656 B1

**Beschreibung**

Die Erfindung betrifft ein Verfahren zur Einstellung der Datenübertragungsrate für die Übertragung von Nutzdaten in einem Weitverkehrsnetz beim Aufbau eines Übertragungspfades, nämlich für eine automatisierte Einstellung der Datenübertragungsrate für den innerhalb eines optischen Kernnetzes verlaufenden Abschnitt des Übertragungspfades, wobei die Netzelemente des optischen Kernnetzes mit FlexRate-Schnittstellen ausgestattet sind. Insbesondere ist das Verfahren für einen Einsatz bei der nach einer Unterbrechung des Pfades innerhalb des Kernnetzes im Wege einer sogenannten restoration erfolgenden Wiederherstellung des Übertragungspfades vorgesehen. Unabhängig davon kommt aber eine Nutzung des Verfahrens selbstverständlich grundsätzlich auch im Zusammenhang mit dem erstmaligen Aufsetzen eines Übertragungspfades innerhalb des optischen Kernnetzes in Betracht. Die Erfindung ist definiert durch den beigefügten Verfahrensanspruch. Die abhängigen Ansprüche definieren besondere Ausgestaltungen.

Bei der optischen Datenübertragung wird gegenwärtig an der Entwicklung von Übertragungstechniken gearbeitet, welche bereits in naher Zukunft den Einsatz sogenannter optischer FlexRate-Schnittstellen ermöglichen, nämlich von optischen Schnittstellen, deren Datenübertragungsrate variabel einstellbar ist. Dabei soll es möglich sein, die Datenübertragungsraten in einem Bereich von voraussichtlich 100 GBit/s bis 1000 GBit/s im Hinblick auf eine fehlervermeidende Datenübertragung in Anpassung an den aufgrund der Netzbeschaffenheit jeweils gegebenen Signal-zu-Rausch-Abstand (darstellbar auch als Signal-Rausch-Verhältnis) in diskreten Abstufungen anzupassen.

Im Rahmen einer solchen Anpassung könnte beispielsweise ein Umschalten der Datenübertragungsrate von 200 GBit/s auf 100 GBit/s erfolgen, sofern dies unter dem Gesichtspunkt des Signal-zu-Rausch-Abstandes beziehungsweise Signal-Rausch-Verhältnisses (englisch auch "optical signal to noise ratio" - "OSNR") für eine gesicherte, das heißt weitgehend fehlerfreie Datenübertragung erforderlich ist. Die vorgenannte Abstufung ist insoweit lediglich beispielhaft, als grundsätzlich auch wesentlich feiner abgestufte Kapazitätsgranularitäten bei derartigen optischen Schnittstellen denkbar sind.

Technisch werden entsprechende unterschiedliche Betriebsmodi mit voneinander verschiedenen Datenübertragungsraten beispielsweise durch den gemischten Einsatz unterschiedlicher Modulationsformate, wie QPSK, 8QAM, 16QAM, ermöglicht. Eine besondere Form dieser Vorgehensweise stellt die hybride Modulation beziehungsweise die "time division hybrid modulation" (TDHM) dar, bei der die verschiedenen Modulationsformen zu festen Zeitabschnitten alternierend zum Einsatz gelangen. Hierbei lässt sich durch eine geeignete Wahl der jeweiligen Zeitdauern des Einsatzes der einzelnen Modulationsformen nahezu jede beliebige Datenübertragungsrate erzeugen. Eine andere insoweit bekannt gewordene Möglichkeit stellt das Prinzip des sogenannten "sliceable bandwidth-variable transponder (S-BVT) dar, bei welchem vereinfacht ausgedrückt eine Verteilung des Datenstroms auf mehrere gekoppelte Wellenlängen erfolgt.

Natürlich ist man bestrebt, in einem Übertragungspfad eines Übertragungsnetzes möglichst jeweils höchste Datenübertragungsraten zur Verfügung zu stellen. Allerdings muss dabei eine (im Sinne von zuverlässig) sichere Datenübertragung unter dem Gesichtspunkt einer weitgehend fehlerfreien Übertragung bewerkstelligt werden. Das heißt empfängerseitig muss eine von einem Sender ausgesendete Datensequenz mit Nutzdaten im Wege der Demodulation zuverlässig wieder aus den beim optischen Empfänger eingegangen Signalen rekonstruiert werden können. Einen wichtigen Parameter stellt in diesem Zusammenhang, wie bereits angesprochen, die OSNR dar.

Sofern die OSNR für einen jeweiligen Anwendungsfall vorzugebende minimale Werte unterschreitet, ist es für einen Empfänger an einem Endpunkt eines optischen Übertragungspfades oder eines Pfadabschnitts auch im Falle des Einsatzes von Korrekturmechanismen, wie der forward error correction (FEC), nicht mehr möglich, aus den empfangenen Daten verwertbare Informationen wieder herzustellen. Das Untergrundrauschen ist dann im Verhältnis zum Pegel der Nutzdaten derart stark, dass eine Decodierung der Nutzdaten auf der Empfängerseite weitgehend unmöglich ist. Die OSNR ist hierbei, abgesehen von der grundsätzlichen Qualität der zur Übertragung verwendeten Glasfaserkabel, sehr stark abhängig von der Länge des Übertragungspfades, wobei sie selbstverständlich mit steigender Übertragungsentfernung sinkt.

Detailliertere Ausführungen zu den zuvor erläuterten Sachverhalten finden sich beispielsweise bei Fred Buchali, Laurent Schmalen, Karsten Schuh, Wilfried Idler in "Optimization of Time-Division Hybrid-Modulation and its Application to Rate Adaptive 200Gb Transmission", The European Conference on Optical Communication (ECOC) 2014, IEEE Conference Publications oder bei A. Autenrieth, J.-P. Elbers, M. Eiselt, K. Grobe, B. Teipen, H. Grießer in "Evaluation of Technology Options for Software-Defined Transceivers in Fixed WDM Grid versus Flexible WDM Grid Optical Transport Networks", ITG-Fachbericht 241: Photonische Netze 2013 Leipzig, VDE Verlag GmbH.

Unter Berücksichtigung der vorstehenden Erläuterungen gilt es, beim Aufbau eines Übertragungspfades in einem optischen Übertragungsnetz die Datenübertragungsrate vorzugsweise entsprechend dem unter Sicherstellung eines Mindestwertes für die OSNR möglichen Maximalwert einzustellen. Jedoch ist dieser Maximalwert für einen in dem Übertragungsnetz beziehungsweise Weitverkehrsnetz jeweils aufzubauenden Übertragungspfad in der Regel zunächst nicht bekannt. Dies gilt auch für den innerhalb des Kernnetzes, respektive optischen Kernnetzes, verlaufenden Pfadabschnitt. Daher wird für den Aufbau eines Übertragungspfades insgesamt, aber auch eines Pfadabschnitts zwischen zwei innerhalb des Kernnetzes miteinander zu verbindenden Endpunkten des Kernnetzes zunächst die grundsätzliche optische Konnektivität hergestellt und vor der Übertragung von Nutzdaten im Wege der Übertragung von Sequenzen mit Testdaten und deren empfängerseitigen Auswertung die unter dem Gesichtspunkt der OSNR mögliche Datenübertragungsrate ermittelt und eingestellt.

Besondere Probleme ergeben sich hierbei im Zusammenhang mit der Gewährleistung einer gewissen Resilienz, sofern nach einer störungs- oder defektbedingten Unterbrechung des Übertragungspfades nach dem Prinzip der restoration ein neuer, die beiden ursprünglich miteinander verbundenen Endpunkte über einen entsprechenden Pfadabschnitt wieder verbindender Übertragungspfad aufgebaut wird. Dies ergibt sich unter anderem daraus, dass der zur restoration innerhalb des Kernnetzes aufgebaute Ersatzpfad (-abschnitt) in der Regel länger ist als der ursprüngliche Übertragungspfad, so dass sich hierdurch zumeist nachteilige Auswirkungen auf die OSNR ergeben.

Dem kann dann durch den Einsatz der bereits erläuterten FlexRate-Schnittstellen begegnet werden, indem für den Ersatzpfad eine niedrigere Datenübertragungsrate eingestellt wird als in dem ursprünglichen Übertragungspfad. Jedoch ist die in dem Ersatzpfad einzustellende Datenübertragungsrate zunächst mit Hilfe entsprechender Datentestsequenzen zu ermitteln. Dies geschieht abschnittsweise, indem, gesteuert durch Einheiten eines Netzmanagementsystems (NMS), jeweils von einem Sender an einem Endpunkt eines Abschnitts eine Testsequenz mit Daten ausgesendet und bei jeweils eingestellter Datenübertragungsrate das an einem Empfänger des anderen Abschnittsendes ankommende Signal ausgewertet wird. Stellt sich hierbei heraus, dass aufgrund einer schlechten OSNR auf der Gegenseite kein zuverlässiger Empfang von Daten möglich ist, so wird unter Nutzung der Möglichkeiten der FlexRate-Schnittstellen die Datenübertragungsrate so weit abgesenkt, bis jeweils empfängerseitig des innerhalb des Kernnetzes verlaufenden Übertragungsabschnitts eine hinreichend gute OSNR festzustellen ist.

Die genannten Vorgänge vollziehen sich, wie bereits ausgeführt, unter Steuerung durch ein NMS des Übertragungsnetzwerkes, welches den für die spätere Übertragung der Nutzdaten verwendeten Netzelementen übergeordnet ist. Durch die Laufzeiten, welche die Sequenzen mit Testdaten jeweils benötigen, und durch die zusätzliche, für den Austausch der Steuerdaten zwischen Sendern und Empfängern des Übertragungsnetzes einerseits und den Einrichtungen des NMS benötigte Zeit kann sich dabei die insgesamt für die restoration, nämlich zur Herstellung der optischen Konnektivität und zur Einstellung der für die nachfolgende Übertragung der Nutzdaten zu verwendenden Datenübertragungsrate benötigte Zeit unter Umständen auf ein bis zwei Minuten summieren. Dies ist aber, im Hinblick auf eine angestrebte unterbrechungsfreie Übertragung der Nutzdaten und auf die hierfür innerhalb des Übertragungsnetzes vorzusehenden Pufferspeicher, eine vergleichsweise lange Zeitdauer.

Eine entsprechende auf der Verwendung von FlexRate-Schnittstellen basierende Lösung wird zum Beispiel durch GWANG-HYUN GHO ET AL in "Rate-Adaptive Modulation and Coding for Optical Fiber Transmission Systems" (JOURNAL OF LIGHTWAVE TECHNOLOGY, IEEE SERVICE CENTER, NEWYORK, NY, US, (20120601), Bd. 30, Nr. 12, 1. Juni 2012, Seiten 1818 - 1828) beschrieben. Gemäß der Druckschrift erfolgt die Festlegung der Datenübertragungsrate in einem Übertragungspfad eines Weitverkehrsnetzes auf iterativem Wege. Dem entsprechenden iterativen Prozess wird das Signal-Rausch-Verhältnis (SNR - signal noise ratio) zugrunde gelegt, welches für durch einen Sender ausgesendete Signale bei dem diese Signale empfangenden Element, also empfängerseitig, unter Rückgriff auf Informationen über im Rahmen des Fehlerkorrekturverfahrens der FEC zur Vorwärtsfehlerkorrektur (FEC = Forward Error Correction) erforderlich werdende Maßnahmen berechnet wird. Hieraus wird dann abgeleitet, ob und wie die Datenübertragungsrate bei dem sendenden und damit bei einem entfernten Netzelement geändert werden muss. Das insoweit zur Beeinflussung der Datenübertragungsrate abgeleitete Ergebnis muss demnach - wohl gesteuert durch übergeordnete Netzwerkkomponenten, wie Komponenten eines Netzwerkmanagements - dem entfernten Netzelement mit dem Sender zugeführt werden.

Auch Gunkel et al. befassen sich in "Flexrate technology for multilayer interworking: The practical benefit of time-granular rate adaptively in aggregation networks", 2015 INTERNATIONAL CONFERENCE ON PHOTONICS IN SWITCH-ING (PS), IEE, 22. September 2015 mit dem Einsatz von FlexRate-Schnittstellen in optischen Netzwerken. Die Autoren thematisieren in dem Fachartikel das Potenzial der FlexRate-Schnittstellen sowie insbesondere deren Vorteile bei der Nutzung des Prinzips der optical protection durch schnelle Pfadumschaltung im Störungsfall zur Verbesserung der Resilienz optischer Netzwerke.

Aufgabe der Erfindung ist es, ein Verfahren anzugeben, durch dessen Einsatz die zuvor beschriebenen Probleme gelöst werden können. Das dazu anzugebende Verfahren soll eine hohe Resilienz durch die Nutzung des Prinzips der restoration bewerkstelligen und dabei gleichzeitig eine Verringerung der Wiederherstellungszeit beim Aufbau eines Ersatzpfades ermöglichen. Das Verfahren soll so gestaltet sein, dass es unabhängig von seinem bevorzugten Einsatz im Rahmen beziehungsweise im Anschluss an eine restoration generell zu einer Verkürzung der für den Aufbau eines Übertragungspfades benötigten Zeit führt.

Die Aufgabe wird durch ein Verfahren mit den Merkmalen des Patentanspruchs 1 gelöst. Vorteilhafte Aus- beziehungsweise Weiterbildungen sind durch die Unteransprüche gegeben.

Gemäß dem vorgeschlagenen Verfahren wird die Datenübertragungsrate für einen Pfadabschnitt eines Übertragungspfades in einem Weitverkehrsnetz eingestellt, der zwei durch Netzelemente ausgebildete Endpunkte eines optischen Kernnetzes des Weitverkehrsnetzes miteinander verbindet. Bei den beiden vorgenannten Endpunkten beziehungsweise Netzelementen handelt es sich beispielsweise um entsprechende Label Switch Router, über die der Datenpfad aus einem Zugangsnetz in das Kernnetz eintritt beziehungsweise aus dem Kernnetz in ein Zugangsnetz austritt. Vorzugsweise ist das Verfahren vorgesehen zur Einstellung der Datenübertragungsrate für den innerhalb eines optischen Kernnetzes verlaufenden Pfadabschnitt eines nach einer Unterbrechung im Wege der restoration wiederhergestellten Übertragungspfades. Der Vorgang des Einstellens der Datenübertragungsrate schließt sich hierbei an das Wiederherstellen der optischen Konnektivität innerhalb des Kernnetzes an, wobei die Konnektivität hergestellt ist, sofern von jeweils einem der Endpunkte ausgesendetes, noch unmoduliertes beziehungsweise keine Nutzdaten transportierendes Licht durch den jeweils anderen Endpunkt, genauer gesagt durch dessen Empfangskomponenten, empfangen werden kann.

Die Datenübertragungsrate wird dabei gemäß dem Verfahren für den innerhalb des Kernnetzes befindlichen Abschnitt des Übertragungspfades in einem automatisierten Vorgang zwischen einem Minimalwert und einem Maximalwert eingestellt. Die Einstellung erfolgt unter der Prämisse, dass ein Arbeitspunkt festgelegt wird, bei dem einerseits das sichere Erkennen von einem Sender eines der genannten Endpunkte ausgesendeter Nutzsignale durch einen diese empfangenden Empfänger des jeweils anderen Endpunkts gewährleistende Datenübertragung (weitgehend fehlerfreie Datenübertragung) ermöglicht wird, wobei die Datenübertragung andererseits mit einer (möglichst) hohen, in beiden Übertragungsrichtungen identischen Datenübertragungsrate erfolgen soll.

Wie noch zu zeigen sein wird, wird dabei der entsprechende Arbeitspunkt gewissermaßen durch ein schrittweises Herantasten an die gewünschte, möglichst hohe Datenübertragungsrate für den Pfadabschnitt innerhalb des optischen Kernnetzes ermittelt. Insoweit ist es selbstverständlich, dass die Datenübertragungsrate, welche letztlich aufgrund des ermittelten Arbeitspunktes für den innerhalb des Kernnetzes geführten Pfadabschnitt des Übertragungspfades eingestellt wird, nicht zwingend die absolut höchstmögliche Datenübertragungsrate darstellt, bei welcher eine sichere (sicher im Sinne einer zuverlässigen Rekonstruktion einer vom Sender ausgesendeten Signalfolge beim Empfänger) Datenübertragung noch gewährleistet ist. Vielmehr bedingt das zuvor angesprochene schrittweise Herantasten eine mehrfache Änderung der Datenübertragungsrate in diskreten Schritten. Insoweit geht es demnach darum, im Zuge des automatisierten Einstellungsprozesses einen Arbeitspunkt zu finden, bei dem die zugehörige Datenübertragungsrate möglichst nahe an den für eine (im Sinne von zuverlässig = weitgehend fehlerfrei) sichere Datenübertragung theoretisch höchstmöglichen Wert herankommt.

Die Forderung nach einer im vorstehenden Sinne sicheren Datenübertragung korreliert hierbei mit der OSNR insoweit, als eine Datenübertragung, bei welcher empfängerseitig eine zuverlässige Rekonstruktion einer ausgesendeten Signalsequenz gewährleistet wird, nur bei einem entsprechend guten Signal-Rausch-Verhältnis möglich ist. Auch sei an dieser Stelle ausdrücklich darauf hingewiesen, dass es das Ziel des Verfahrens ist, in dem innerhalb des Kernnetzes verlaufenden Pfadabschnitt zwischen den dessen Endpunkte bildenden Netzelementen in beiden Richtungen eine identische Datenübertragungsrate einzustellen. Dies ist getragen von der Überlegung, dass die Datenübertragung in der Praxis bidirektional zwischen den beiden Endpunkten des Kernnetzes erfolgt und Einschränkungen der OSNR aufgrund der Streckenführung nahezu gleichwertig in Hin- und Rückrichtung sind. Auch wenn letzteres nicht 100 % korrekt ist, so bildet diese Überlegung - wie noch gezeigt werden soll - dennoch gleichzeitig einen wichtigen Ansatzpunkt für die Lösung der gestellten Aufgabe, wobei das erfindungsgemäße Verfahrens in seiner konkreten Ausgestaltung auch insoweit gegebenenfalls zwischen beiden Übertragungsrichtungen bestehenden Unterschieden Rechnung trägt.

Im Hinblick auf die Gegebenheiten in dem Weitverkehrsnetz, genauer gesagt in dessen hier betrachteten optischen Kernnetz, sei an dieser Stelle ferner noch darauf hingewiesen, dass dieses durch eine Mehrzahl durch optische Kabel (sogenannte Kanten) miteinander verbundene Netzelemente (auch als Knoten bezeichnet) einschließlich der bereits genannten, die beiden Endpunkte ausbildenden Netzelemente, gebildet ist und dass das Zusammenwirken dieser Netzelemente durch ein Netzmanagementsystem gesteuert wird. Hierbei sind die die angesprochenen Endpunkte des betrachteten Pfadabschnitts ausbildenden Netzelemente jeweils mit Sende- und Empfangskomponenten aufweisenden FlexRate-Schnittstellen, nämlich mit Schnittstellen mit einer variabel einstellbaren Datenübertragungsrate, ausgestattet sowie mit einer Steuereinheit zur Einstellung der jeweiligen Datenübertragungsrate. Bei diesen Netzelementen handelt es sich demnach, wie auch bei vielen anderen, um keinen Endpunkt des im Kernnetz verlaufenden Pfadabschnitts des betrachteten Datenübertragungspfades, sondern gewissermaßen um Transitelemente. Es handelt sich bei ihnen aber gleichwohl um aktive Netzelemente, die Sende- und Empfangskomponenten, FlexRate-Schnittstellen sowie eine Steuereinheit aufweisen. Darüber hinaus gibt es aber in dem Kernnetz auch passive Netzelemente, welche dennoch in Steuerungsvorgänge des Netzmanagementsystems mit einbezogen werden. Wie bereits eingangs zum Stand der Technik ausgeführt, erfolgt die Einstellung der Datenübertragungsrate einer jeweiligen FlexRate-Schnittstelle beispielsweise durch die Auswahl eines von mehreren unterschiedlichen Modulationsverfahren oder durch eine in festen Zeitabständen alternierende Auswahl des jeweils verwendeten, der möglichen Modulationsverfahren.

Abweichend vom Stand der Technik, gemäß welchem die Einstellung der Datenübertragungsrate für einen Übertragungspfad in einem mit FlexRate-Schnittstellen ausgestatteten Netz anhand der gemessenen Güte der Verbindung auf der Grundlage einer Berechnung im dem Netzmanagementsystem erfolgt oder eine entsprechende Vorgehensweise vorgesehen ist, geschieht dies gemäß der Erfindung ohne Einbeziehung des Netzmanagementsystems in einem iterativen Prozess. Der bereits früher angesprochene Ansatzpunkt für das erfindungsgemäße Verfahren liegt dabei darin, dass sich die einzustellende Datenübertragungsrate, bei unterstellt gleichen Verhältnissen in beiden Senderichtungen, gewissermaßen rein lokal bestimmen lässt. Dabei ist es mit Blick auf die unterstellte bidirektionale Gleichheit des im Kernnetzt verlaufenden Pfadabschnitts möglich, eine von einem Endpunkt beziehungsweise seinen Sendekomponenten ausgesendete Signalsequenz mit den von den Empfangseinheiten desselben Endpunktes empfangenen Signalen zu vergleichen und so zu prüfen, ob die ausgesendete Sendesequenz bei einer jeweiligen, auf ihre Nutzbarkeit zu untersuchenden Datenübertragungsrate auch empfängerseitig rekonstruierbar ist, sofern der jeweils andere Endpunkt zeitsynchron dieselbe - oder aber, unter anderem auch zur Berücksichtigung der tatsächlich nicht 100 %-gen bidirektionalen Gleichheit - nur vermeintlich dieselbe Signalsequenz aussendet.

Daher wird erfindungsgemäß von den beiden Endpunkten, genauer gesagt von deren Sendekomponenten beziehungsweise von den Sendekomponenten ihrer FlexRate-Schnittstellen, wiederholt, jeweils zeitsynchron eine Signalsequenz ausgesendet, bei der es sich hinsichtlich ihrer, beispielsweise durch ein Kennzeichen innerhalb der Sequenz erkennbaren Art um eine Testsequenz oder um eine Abschlusssequenz handelt. Die letztgenannte Sequenz steht hierbei, wie die Bezeichnung bereits vermuten lässt, im Zusammenhang mit dem Abschluss des Iterationsprozesses oder mit dessen unmittelbaren Bevorstehen, was im Zusammenhang mit der weiteren Erläuterung des Verfahrens noch verdeutlicht werden wird.

Gemäß dem Verfahren sind die Datenübertragungsrate und die Art der bei einem jeweiligen Sendevorgang ausgesendeten Signalsequenz, zwar nicht während eines Sendevorgangs, aber gegenüber vorhergehenden Sendevorgängen in Abhängigkeit der vom jeweils selben Endpunkt während des vorhergehenden Sendevorgangs empfangenen Signale veränderlich. Dies meint, dass durch einen jeweiligen Endpunkt eine oder beide der vorgenannten Eigenschaften (Datenübertragungsrate, Art) der Signalsequenz gegenüber den Eigenschaften der durch denselben Endpunkt zuvor ausgesendeten Signalsequenz verändert werden können, aber nicht müssen. Die Datenübertragungsrate und die Art der von jedem der beiden Endpunkte jeweils ausgesendeten Signalsequenz werden dabei, ebenso wie das Abbruchkriterium, gemäß welchem die einzustellende Datenübertragungsrate schließlich als ermittelt gilt, durch ein in den Steuereinheiten der Endpunkte hinterlegtes Regelwerk bestimmt.

Der Iterationsvorgang gestaltet sich hierbei wie folgt:

a) Bei einem ersten Sendevorgang wird von beiden Endpunkten eine (hinsichtlich Datenübertragungsrate und Art) identische Signalsequenz ausgesendet, welche eine Testsequenz darstellt. Selbstverständlich liegt die Datenübertragungsrate dieser Testsequenz innerhalb des durch deren Minimal- und Maximalwert festgelegten Intervalls, wobei dieses vorzugsweise den Minimal- und den Maximalwert selbst mit einbezieht.

b) Bei nachfolgenden Sendevorgängen wird von einem jeweiligen Endpunkt eine sich gegenüber der jeweils zuvor ausgesendeten Signalsequenz hinsichtlich ihrer Datenübertragungsrate oder/und ihrer Art unterscheidende Signalsequenz ausgesendet. Was die Art dieser Signalsequenz anbelangt, so kann es sich abermals um eine Testsequenz oder um eine als Abschlusssequenz zu betrachtende Signalsequenz handeln. Hierbei sei darauf hingewiesen, dass insoweit auch bei nachfolgenden Sendevorgängen jeweils von beiden Endpunkten eine Signalsequenz ausgesendet wird, wobei die beiden Signalsequenzen, nämlich die durch einen Endpunkt ausgesendete Signalsequenz und die gleichzeitig von dem anderen Endpunkt ausgesendete Signalsequenz, nicht identisch sein müssen. Ob die von einem Endpunkt ausgesendete Signalsequenz gegenüber der von diesem Endpunkt in einem vorangegangenen Sendevorgang ausgesendeten Signalsequenz hinsichtlich ihrer Datenübertragungsrate oder ihrer Art oder gar beider der vorgenannten Merkmale verändert wird, ist abhängig von den während des vorhergehenden Sendevorgangs empfangenen (oder eben nicht empfangenen) Signalen und resultiert aus der Anwendung einer Regel eines in den Steuereinheiten, also in einem Speicher der Steuereinheiten, hinterlegten Regelwerks.

Zu den Möglichkeiten einer Ausgestaltung eines solchen Regelwerks sollen genauere Ausführungen an späterer Stelle beispielhaft erfolgen. Soweit es sich, wie ausgeführt, hinsichtlich der Art der jeweils ausgesendeten Signalsequenz entweder erneut um eine Testsequenz oder um eine Abschlusssequenz handelt, sei angemerkt, dass eine ausgesendete Testsequenz nicht zwingend identisch (im Hinblick auf die in ihr enthaltene Signalfolge) sein muss mit der im vorangegangenen Sendevorgang ausgesendeten Testsequenz. Sofern jedoch beide Endpunkte erneut eine Testsequenz aussenden, so sind diese beiden Testsequenzen einander wiederum identisch. Das heißt, es besteht einerseits die Möglichkeit, dass beim Aussenden von Testsequenzen über den gesamten Iterationsprozess hinweg (hinsichtlich der enthaltenen Daten) stets dieselbe beziehungsweise identische Signalsequenz verwendet wird, wobei es aber andererseits auch denkbar ist, dass in den Steuereinheiten der Endpunkte gewissermaßen eine Tabelle mit unterschiedlichen, in ihrer Abfolge fest vorgegebenen Testsequenzen hinterlegt ist. Zur Frage der jeweiligen Art einer von einem Endpunkt ausgesendeten Signalsequenz sei angemerkt, dass die Abschlusssequenz (es gibt nur eine bestimmte Signalsequenz, welche die Abschlusssequenz ist) von einer Testsequenz beziehungsweise von Testsequenzen unterscheidbar sein muss, beispielsweise durch ein in der Sequenz enthaltenes, sie eindeutig charakterisierendes Merkmal. In jedem Falle ist dabei den Steuereinheiten der beiden Endpunkte selbstverständlich die als Abschlusssequenz definierte (einzigartige) Signalsequenz bekannt.

c) Wie zuvor unter b) ausgeführt wurde, wird für die sich an den ersten Sendevorgang anschließenden Sendevorgänge die jeweils ausgesendete Signalsequenz gegenüber der Signalsequenz des vorhergehenden Sendevorgangs zumindest hinsichtlich eines Merkmals, nämlich der Datenübertragungsrate oder der Art, verändert. Tritt jedoch gemäß dem Regelwerk die Situation ein, dass in einem solchen weiteren Sendevorgang die von einem Endpunkt ausgesendete Signalsequenz gegenüber der zuvor von demselben Endpunkt ausgesendeten Signalsequenz sowohl hinsichtlich der Datenübertragungsrate als auch hinsichtlich ihrer Art verändert wird, so wird diese in dem Moment ausgesendete Signalsequenz von dem betreffenden Endpunkt in weiteren sich anschließenden Sendevorgängen unverändert beibehalten. In jedem Falle handelt es sich dann bei der ausgesendeten Signalsequenz um die festgelegte Abschlusssequenz. Diese wird von dem betreffenden Endpunkt dann (auch hinsichtlich der Datenübertragungsrate) unverändert so lange ausgesendet, bis ein Empfänger dieses Endpunktes dieselbe Signalsequenz (Abschlusssequenz) vom anderen Endpunkt empfängt.

d) Die Datenübertragungsrate der Signalsequenz gemäß dem vorstehenden, die Iteration beendenden Schritt c), mit welcher die Empfangskomponenten beider Endpunkte eine Abschlusssequenz empfangen, ist schließlich diejenige Datenübertragungsrate, mit der innerhalb des Kernnetzes nachfolgend Nutzdaten über den Übertragungspfad übertragen werden, das heißt diejenige Datenübertragung, welche demnach für den innerhalb des Kernnetzes geführten Abschnitt des Übertragungspfades eingestellt wird, genauer gesagt, bereits eingestellt ist.

Entsprechend einer möglichen Ausgestaltung des Verfahrens kann der vorgenannte Punkt beziehungsweise Schritt b) in der Weise umgesetzt werden, dass die Datenübertragungsrate beginnend von einem Minimalwert in den aufeinanderfolgenden Sendevorgängen mit einer äquidistanten Schrittweite in Richtung eines Maximalwertes bis zur Ermittlung der letztlich für den im Kernnetz geführten Abschnitt des Übertragungspfades einzustellenden Datenübertragungsrate vorzugsweise in äquidistanten Schritten erhöht wird. Eine entsprechende Erhöhung der Datenübertragungsrate erfolgt dabei jedenfalls zumindest bis zum letztmaligen Aussenden einer Testsequenz (also solange noch keine Abschlusssequenz ausgesendet wird), was später noch im Zusammenhang mit der Darstellung eines entsprechenden Ausführungsbeispiels deutlich werden wird.

Bei dem Minimalwert für die Datenübertragungsrate, wie er bei dieser Ausgestaltung im Schritt a) beim erstmaligen Aussenden der identischen Testsequenz verwendet wird, handelt es sich um einen Wert, der entweder durch die technische Beschaffenheit der FlexRate-Schnittstellen selbst vorgegeben ist oder um eine Datenübertragungsrate, welche insoweit nicht unterschritten werden soll, als eine Übertragung von Nutzdaten mit einer niedrigeren Datenübertragungsrate im Hinblick auf die heute an ein Weitverkehrsnetz gestellten Anforderungen als nicht sinnvoll beziehungsweise wünschenswert angesehen wird. Der absolute Maximalwert, welcher für den Pfadabschnitt innerhalb des Kernnetzes einstellbar ist, wird durch den gemäß den Spezifikationen beziehungsweise der technischen Beschaffenheit der FlexRate-Schnittstellen bestimmt. Der in dem Pfadabschnitt tatsächlich mögliche (aufgrund des Herantastens aber in der Regel letztlich nicht eingestellte) Höchstwert für die eine zuverlässige Datenübertragung in dem Pfadabschnitt ermöglichende Datenübertragungsrate wird aber letztlich durch das schwächste Glied unter den Netzelementen des Kernnetzes bestimmt. In der Praxis wird es hierbei möglicherweise so sein, dass die FlexRate-Schnittstellen hinsichtlich des durch sie bereitgestellten Bereiches für die Datenübertragungsrate entsprechend den einerseits bestehenden Anforderungen und den andererseits diesbezüglich im Kernnetz beziehungsweise dessen Netzelementen bestehenden Gegebenheiten konfiguriert werden.

Eine andere, hinsichtlich des Minimalwertes und des Maximalwertes für die Datenübertragungsrate von grundsätzlich gleichen Überlegungen getragene Ausgestaltungsmöglichkeit des Verfahrens besteht darin, die Datenübertragungsrate in den aufeinanderfolgenden Sendevorgängen gemäß Schritt b), ausgehend von einer für das Aussenden der Testsequenz im Schritt a) verwendeten maximalen Datenübertragungsrate, (zumindest bis zum letztmaligen Aussenden einer Testsequenz) mit einer äquidistanten Schrittweite fortlaufend zu verringern. Auf diese Weise nähert man sich der letztlich für den Übertragungspfad, nämlich für dessen Abschnitt im Kernnetz, einzustellenden Datenübertragungsrate gewissermaßen von oben an.

Über die beiden zuvor betrachteten Ausbildungsformen hinaus sind außerdem Gestaltungen des Verfahrens möglich, bei denen die Datenübertragungsrate der von einem Endpunkt ausgesendeten Signalsequenz von einem Sendevorgang zum nächsten nicht mit einer äquidistanten Schrittweite verändert wird. Eine Möglichkeit besteht beispielsweise in der Anwendung des Bisektionsverfahrens. Hierbei erfolgt dann eine Änderung der Datenübertragungsrate wechselnd (was nicht zwingend wechselnd von einem Sendevorgang zum nächsten meint) durch deren Erhöhung oder Verringerung, wobei die Schrittweite für die Veränderung von Sendevorgang zu Sendevorgang jeweils halbiert wird.

Der Vorteil des erfindungsgemäßen Verfahrens liegt insbesondere darin, dass die Einstellung der Datenübertragungsrate in einem neu aufgesetzten Übertragungspfad (-abschnitt) ohne das Erfordernis einer Einbeziehung des Netzmanagementsystems in jedem Fall deutlich schneller erfolgen wird. Indirekt verbessert sich hierdurch auch die Resilienz für das Netzwerk (Weitverkehrsnetz) beziehungsweise insbesondere für dessen Kernnetz. Dies basiert darauf, dass betrachtete Fehlerszenarien und die im Zusammenhang damit vorgeschlagenen Lösungen zur Fehlerbehebung sich in der Praxis üblicherweise, wegen der Komplexität der Netzwerke und des Zusammenwirkens ihrer Elemente jeweils nur auf einen Fehler innerhalb einer Zeiteinheit beziehen. Wenn sich aber die Zeitdauer, welche benötigt wird, bis nach der Beseitigung eines Fehlers für den Datenübertragungspfad wieder alle Parameter, einschließlich der verwendeten Datenübertragungsrate, richtig eingestellt sind, erhöht, so steigt hiermit auch die Wahrscheinlichkeit, dass in der Zwischenzeit ein weiterer Fehler auftritt und den daraus im Netzwerk resultierenden komplexen Gegebenheiten schlechter mit geeigneten Fehlerbeseitigungsmaßnahmen entgegengewirkt werden kann. Umgekehrt reduziert sich also mit der Verkürzung der Zeitdauer für das Einstellen der Datenübertragungsrate das Risiko, das zwischenzeitlich ein weiterer Fehler eintritt, durch welchen die Komplexität der bei der Fehlerbeseitigung zu berücksichtigenden Gegebenheiten und Randbedingungen deutlich steigt und die sich insoweit einstellenden Verhältnisse schwerer beherrschbar werden.

Unabhängig der für die jeweilige Veränderung der Datenübertragungsrate gewählten Verfahrensvariante ist eine Ausgestaltungsform des Verfahrens gemäß einer praktischen Umsetzung dadurch gegeben, dass die Datenübertragungsrate für einen Pfadabschnitt zwischen zwei, in diesem Fall die Endpunkte ausbildenden Label Switch Routern eingestellt wird. Bei den Label Switch Routern handelt es sich demnach um Netzelemente, welche mit FlexRate-Schnittstellen ausgestattet sind, welche wiederum Sende- und Empfangskomponenten aufweisen.

Wie vorstehend bei der grundsätzlichen Beschreibung des erfindungsgemäßen Verfahrens ausgeführt, besteht ein wesentliches Erfordernis darin, dass die Signalsequenzen, unabhängig von ihrer jeweiligen Datenübertragungsrate oder ihrer Art, in den aufeinanderfolgenden Sendevorgängen durch die Endpunkte beziehungsweise deren Sendekomponenten jeweils zeitsynchron ausgesendet werden. Zwischen den einzelnen Sendevorgängen erfolgt dabei gewissermaßen eine kurze Pause, in welcher während einer Haltezeit in einer Größenordnung von unter einer Sekunde - vorzugsweise von einigen Millisekunden - keine Signalsequenzen ausgesendet werden. Die Synchronisierung kann dabei dadurch erfolgen, dass beispielsweise nach einer restoration (Wiederherstellung der Konnektivität nach einem aufgetretenen Fehler) durch das Netzmanagementsystem den Endpunkten ein Referenzzeitpunkt vorgegeben wird, zu welchem diese mit der erstmaligen Aussendung einer Testsequenz beginnen. Gemäß einer bevorzugten Weiterbildung des Verfahrens erfolgt aber auch die Synchronisierung der Endpunkte zur Ermöglichung der zeitsynchronen Aussendung der der Einstellung der Datenübertragungsrate dienenden Signalsequenzen ohne Einbeziehung des Netzmanagementsystems. Vielmehr synchronisieren sich die Endpunkte beziehungsweise deren Sende- und Empfangskomponenten mit Hilfe von dazu vorgesehenen Synchronisierungssequenzen selbst aufeinander. Dies wird im Zuge der Ausführungen zu den Zeichnungen beziehungsweise im Zusammenhang mit der Erläuterung zugehöriger Ausführungsbeispiele noch veranschaulicht.

Anhand von Zeichnungen sollen nachfolgend nochmals Einzelheiten des erfindungsgemäßen Verfahrens erläutert und Beispiele für seine mögliche Umsetzung gegeben werden. Hierzu zeigen im Einzelnen:

Fig. 1:  ein Ablaufschema des Verfahrens unter Einbeziehung einer zwischen den Endpunkten erfolgenden Synchronisierung,

Fig. 2:  eine schematische Darstellung eines optischen Kernnetzes mit einem bezüglich seiner Datenübertragungsrate einzustellenden Abschnitt eines Übertragungspfades.

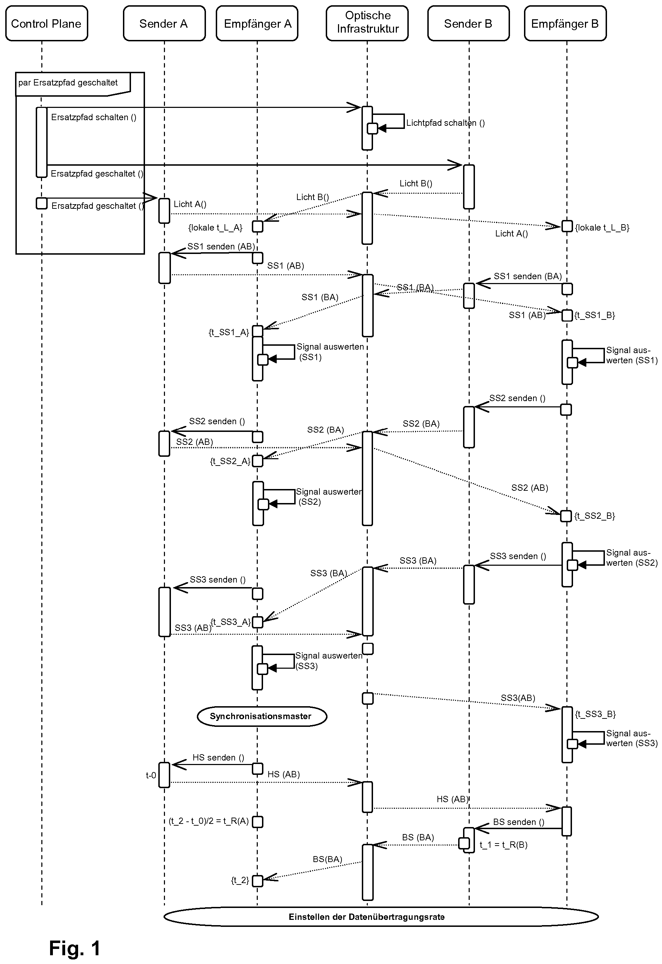

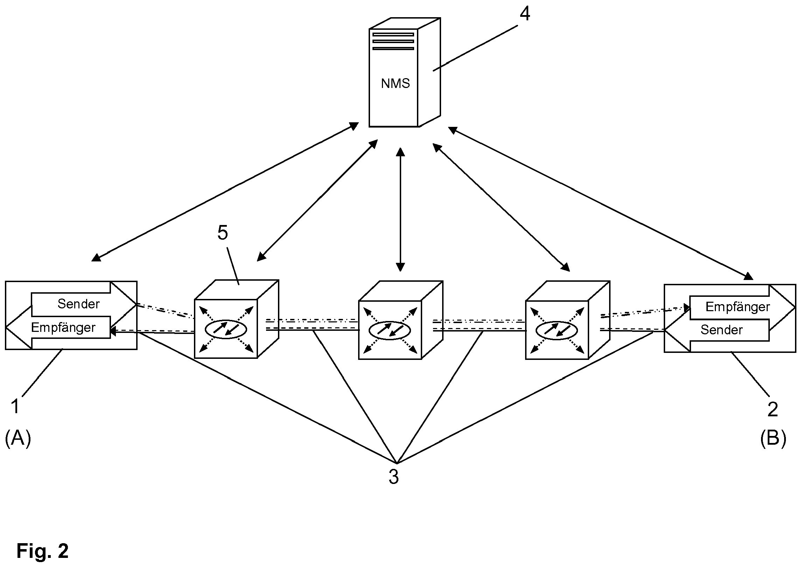

Zunächst soll kurz auf die schematische Darstellung der Fig. 2 eingegangen werden. Danach soll anhand der Fig. 1 der grundsätzliche Ablauf des erfindungsgemäßen Verfahrens in einer Ausgestaltung mit einer selbsttätig zwischen den Endpunkten beziehungsweise den sie ausbildenden Netzelementen (zum Beispiel Label Switch Router mit FlexRate-Schnittstellen, einschließlich Sende- und Empfangskomponenten) erfolgenden Synchronisierung erläutert werden, bevor dann für den eigentlichen iterativen Prozess der Einstellung der Datenübertragungsrate anhand zugehöriger Tabellen zwei mögliche Ausführungsbeispiele gegeben werden.

Die Fig. 2 zeigt eine grobe beziehungsweise stark vereinfachte schematische Darstellung eines optischen Kernnetzes als Teil eines Weitverkehrsnetzes. In der Darstellung sind nur einige wenige Netzelemente des Kernnetzes gezeigt, wobei das Zusammenwirken aller (auch der nicht gezeigten) Netzelemente durch ein in der Figur symbolisch dargestelltes Netzmanagementsystem 4 gesteuert wird. Gemäß dem gezeigten Beispiel umfassen die Netzelemente sowohl passive Netzelemente auch als aktive Netzelemente, wobei Letztere dadurch gekennzeichnet sind, dass sie mit (hier nicht gezeigten) FlexRate-Schnittstellen, einschließlich optischer Sende- und Empfangskomponenten, ausgestattet sind. Bei den Sendekomponenten handelt es sich insbesondere um einen entsprechenden Sendelaser als den eigentlichen Sender, welcher das als Trägersignal genutzte Licht aussendet und zugehörige Mittel zur Wandlung elektrischer Signale in optische durch Modulation des Trägersignals. Die Empfangskomponenten umfassen den eigentlichen optischen Empfänger - in der Regel eine spezielle Fotodiode - sowie Mittel zur optisch-elektrischen Wandlung und Auswertung empfangener Signale im Wege der Demodulation. Nachfolgend sollen die Sendekomponenten, zur sprachlichen Vereinfachung, synonym auch als Sender und die Empfangskomponenten als Empfänger bezeichnet werden.

Zu den passiven Netzelementen gehören beispielsweise die in der Figur ebenfalls symbolisch dargestellten ROADMs 5 (Reconfigurable Optical Add Drop Multiplexer), welche dem wellenlängenselektiven Ein- und Auskoppeln einzelner Übertragungskanäle dienen.

Es sei angenommen, dass nach einer Unterbrechung ein in Bezug auf den Pfadabschnitt 3 innerhalb des Kernnetzes neuer Übertragungspfad in dem Weitverkehrsnetz aufgebaut worden ist, wobei für den innerhalb des Kernnetzes verlaufenden (neu aufgesetzten) Pfadabschnitt 3 eine möglichst hohe Datenübertragungsrate eingestellt werden soll. Die Technik der FlexRate-Schnittstellen, mit welchen die aktiven Elemente des Kernnetzes ausgestattet sind, ist noch vergleichsweise jung und wird gegenwärtig erst beziehungsweise sogar erst in naher Zukunft in größerem Maße in der Praxis eingeführt. Soweit dies der Fall ist, ist es hierbei vorgesehen, dass die in dem Pfadabschnitt 3 einzustellende Datenübertragungsrate anhand von Messwerten bestimmt wird, welche dem Netzmanagementsystem 4 zugeführt und dort zur Festlegung der Datenübertragungsrate verarbeitet werden. In dem Netzmanagementsystem 4, als einer zentralen, aber aus Redundanzgründen möglicherweise über mehrere Standorte verteilten Instanz, werden die Informationen gesammelt, bewertet und dann in eine Betriebskonfiguration der Netzelemente übersetzt. Das dauert aber eine gewisse Zeit, so dass damit die transiente Zeit der die Wiederherstellung eines Übertragungspfades ermöglichenden Schutzschaltung verlängert wird.

Abweichend hiervon erfolgt aber die Einstellung der Datenübertragungsrate für den Pfadabschnitt 3 innerhalb des Kernnetzes gemäß der Erfindung ohne Einbeziehung des Netzmanagementsystems in einem automatisierten Vorgang im Wege eines iterativen Herantastens an einen möglichst hohen Wert für diese Datenübertragungsrate. Der Pfadabschnitt 3, für welchen die Einstellung der Datenübertragungsrate solchermaßen erfolgt, verbindet zwei Endpunkte 1, 2 des optischen Kernnetzes miteinander, über welche der Übertragungspfad in das Kernnetz eintritt beziehungsweise aus diesem austritt. Bei diesen Endpunkten 1, 2 handelt es sich jedenfalls um aktive Netzelemente, welche mit (nicht dargestellten) Sende- und Empfangskomponenten als Bestandteile der schon mehrfach angesprochenen (ebenfalls nicht gezeigten) FlexRate-Schnittstellen ausgestattet sind. Auch die die Endpunkte 1, 2 ausbildenden Netzelemente sind in der Darstellung lediglich symbolisch dargestellt, wobei die jeweils in entgegengesetzte Richtung weisenden Pfeile die beiden Senderichtungen beziehungsweise den bidirektionalen Charakter des Datenübertragungspfades und seines innerhalb des Kernnetzes verlaufenden Pfadabschnitts 3 symbolisieren.

Die Fig. 1 stellt einen möglichen Ablauf des erfindungsgemäßen Verfahrens in einem Ablaufschema dar, welches die der eigentlichen Einstellung der Datenübertragungsrate vorangehende Wiederherstellung des Übertragungspfades im Bereich des Kernnetzes (Pfadabschnitt 3) und insbesondere die Synchronisierung der beiden Endpunkte 1, 2 nach dem Wiederaufsetzen des Pfades, also nach der Herstellung der optischen Konnektivität innerhalb des Pfadabschnittes 3, umfasst. Der automatisierte Vorgang des Einstellens der Datenübertragungsrate selbst soll für zwei mögliche Ausgestaltungsformen durch die beiden in den Kontext dieser Erläuterungen eingefügten Tabellen 1 und 2 verdeutlicht werden. Zur besseren Unterscheidbarkeit von den ansonsten in dem Ablaufschema zur Indizierung verwendeten Zahlen, sind die Endpunkte 1, 2 beziehungsweise deren Sender und Empfänger hier mit A (Endpunkt 1) beziehungsweise B (Endpunkt 2) bezeichnet worden.

Demgemäß vollzieht bei der Wiederherstellung des Übertragungspfades beziehungsweise seines in dem Kernnetz verlaufenden Pfadabschnitts 3 der nachfolgend erläuterte Ablauf. Nach dem Fehlereintritt wird der neue Übertragungspfad von einer sogenannten zentralen Path Computation Engine (PCE) berechnet. Diese Berechnung basiert auf Topologie-Informationen in Datenbanken (unter Außerbetrachtlassung der beeinträchtigten Kante). Die Provisionierung ("Bekanntgabe") des neuen Pfades in die Netzelemente hinein erfolgt durch das Netzmanagementsystem (NMS) über übliche Wege, das heißt über entsprechende Steuerverbindungen (gekennzeichnet durch die Pfeile zwischen dem NMS und den Netzelementen) unter Nutzung dafür gebräuchlicher Protokolle.

Der neue Lichtpfad wird im Sinne des Wiederherstellens einer Konnektivität gleichzeitig bidirektional eingerichtet, ohne das Trägersignal (Lichtsignal) zu modulieren. Dabei werden alle Netzelemente in Hin- und Rückrichtung gleichermaßen durchlaufen, aber in entgegengesetzter Reihenfolge Eine der beiden Richtungen wird schneller eingerichtet sein als die andere (unproblematischer Gutfall: beide sind ausnahmsweise exakt gleichzeitig eingerichtet). Der Zeitpunkt, zu dem erstmalig Licht auf die Diode einer Empfangskomponente eines der Endpunkte trifft, ist das "lokale t_L" (der betreffende Endpunkt "weiß" nicht, ob er früher Licht empfängt als sein Pendant auf der entfernten Seite).

Nach der Herstellung der Konnektivität beginnen die Netzelemente (Verstärker, Router, ROADMs 5 u.s.w.) in beide Richtungen die Amplitude einzupegeln, das heißt die Amplitude auf einen in beiden Richtungen annähernd gleichen Wert einzuregeln. Dieses Einpegeln ist erforderlich, um grundsätzlich eine gute OSNR in dem Pfadabschnitt 3 erreichen zu können. Parallel zum Vorgang des Einpegelns beginnt der (jeweilige lokale) Sender, strukturierte Signale (Synchronisierungssequenz SS1) mit einer garantiert empfangbaren Datenrate zu modulieren. Startpunkt ist das lokale t_L. Hierbei ist zu beachten, dass die Signale bis zum Abschluss des Vorgangs des Einpegelns auf der Empfängerseite weder erkannt noch interpretiert werden können. Entweder wird der in der Regel mit einer Fotodiode ausgestattete Empfänger übersteuert (zu hohe Amplitude und Auswerten nicht möglich) oder die OSNR ist zu schlecht (die Fotodiode empfängt nur Rauschen ohne Struktur).

Zu einem Zeitpunkt t_SS1 beginnt der Empfänger, die strukturierten Signale der Gegenseite auszuwerten, das heißt, er empfängt "sinnvolle" Daten. Dazu ist es notwendig, dass die Synchronisierungssequenz SS1 a priori festgelegt ist und die Logik in der Schnittstelle (das heißt die Steuereinheit in den Netzelementen beziehungsweise Endpunkten) zwischen (lokalem) Sender und (lokalem) Empfänger vergleichen kann. Sobald strukturierte Daten empfangen werden, wird im Sender auf eine Synchronisierungssequenz SS2 umgeschaltet. Das definiert den Zeitpunkt t_SS2. Es kann hierbei passieren, dass t_SS2 vor t_SS1 liegt, nämlich dann, wenn die Gegenseite schneller ist und alle zuvor beschriebenen Schritte in die betrachtete Richtung schneller umgesetzt werden). In diesem Fall antwortet der Sender mit einer Synchronisierungssequenz SS3 (aber zum lokalen Zeitpunkt t_SS2!). Mit anderen Worten: "Sieht" der Empfänger die Synchronisierungssequenz SS1 zuerst antwortet der zugehörige Sender des Endpunktes mit SS2. Wenn hingegen der Empfänger die Synchronisierungssequenz SS2 zuerst "sieht", antwortet der Sender mit SS3. Im letztgenannten Fall "sieht" die Gegenstelle, respektive der andere Endpunkt, niemals SS2.

Unter Berücksichtigung der vorstehenden Ausführungen wird festgelegt: Derjenige Endpunkt 1, 2 (A, B) mit dem gekoppelten System aus Sende- und Empfangskomponenten, an dem direkt der Eingang beziehungsweise Empfang von SS3 bemerkt wird, ist der "Synchronisationsmaster". Der Synchronisationsmaster sendet eine Herausforderungssequenz HS. Das definiert den Zeitpunkt t_0. Die Gegenseite empfängt HS und antwortet mit einer Bestätigungssequenz BS. Das definiert den Zeitpunkt t_1. Der Empfang der Bestätigungssequenz BS durch den Synchronisationsmaster definiert den Zeitpunkt t_2. Für den Referenzzeitpunkt t_R, das heißt den Zeitpunkt zu dem Synchronität zwischen den Endpunkten 1, 2 (A, B) besteht und mit der zeitsynchronen Aussendung der Signalsequenzen zur Einstellung der Datenübertragungsrate begonnen werden kann gilt dann entweder

$$t\_R = (t\_2 - t\_0)/2 \text{ (beim Master) oder } t\_R = t\_1 \text{ (beim Nicht-Master)}.$$

An die Synchronisierung schließt sich, beginnend mit dem Referenzzeitpunkt t_R, das eigentliche Einstellen der Datenübertragungsrate in dem Pfadabschnitt 3 an. Entsprechend einer ersten möglichen Ausgestaltung des erfindungsgemäßen Verfahrens erfolgt diese dadurch, dass durch die Endpunkte 1, 2 (A, B) jeweils zeitsynchron Testsequenzen ausgesendet werden, mittels welcher die Endpunkte 1, 2 (A, B) die schließlich einzustellende Datenübertragungsrate dadurch ermitteln, dass sie sich ausgehend von einem Minimalwert schrittweise, und zwar mit einer konstanten, das heißt äquidistanten, Schrittweite an diese Datenübertragungsrate herantasten.

Hierbei senden beide Endpunkte 1, 2 (A, B) zum Referenzzeitpunkt t_R eine identische Testsequenz mit identischer Datenübertragungsrate, nämlich mit einer Datenübertragungsrate von 100 Gbit/s aus. In darauffolgenden Sendevorgängen wird durch beide Endpunkte jeweils wieder zeitsynchron eine Signalsequenz ausgesendet, bei welcher es sich um eine Signalsequenz handelt, die gegenüber dem vorhergehenden Sendevorgang mit einer erhöhten Datenübertragungsrate ausgesendet wird oder/und hinsichtlich ihrer Art verändert wird. Unter der Annahme, dass die schließlich für den Pfadabschnitt 3 einzustellende Datenübertragungsrate 600 Gbit/s beträgt, kann sich der Ablauf mit den wiederholten Sendevorgängen zum Beispiel wie in der Tabelle 1 gezeigt gestalten. Auf die Angabe der Einzelheiten für die ersten, mit einer noch verhältnismäßig niedrigen Datenübertragungsrate erfolgenden Sendevorgänge ist dabei in der Tabelle 1 verzichtet worden, so dass nur die letzten Schritte (Sendevorgänge) bis zur Ermittlung und Einstellung der Datenübertragungsrate für den Pfadabschnitt 3 in der Tabelle ausgewiesen sind.

Tabelle 1

| Schritt | Endpunkt 1 (Endpunkt A) | | Endpunkt 2 (Endpunkt B) | |
|---|---|---|---|---|
| • | • | | • | |
| • | • | | • | |
| • | • | | • | |
| x | sendet empfängt | TS 600 Gbit/s TS 600 Gbit/s | sendet empfängt | TS 600 Gbit/s TS 600 Gbit/s |
| x + 1 | sendet empfängt | TS 700 Gbit/s TS 700 Gbit/s | sendet empfängt | TS 700 Gbit/s (-) |
| x + 2 | sendet empfängt | TS 800 Gbit/s AS 600 Gbit/s | sendet empfängt | AS 600 Gbit/s (-) |
| x + 3 | sendet empfängt | AS 600 Gbit/s AS 600 Gbit/s | sendet empfängt | AS 600 Gbit/s AS 600 Gbit/s |

In der Tabelle 1 bedeuten, ebenso wie in der nachfolgende Tabelle 2, die Zahlen und Symbole im Einzelnen folgendes:

1, 2 =    Endpunkte 1, 2 bzw. Endpunkte A, B des Kernnetzes,
TS =      Testsequenz,
AS =      Abschlusssequenz
(-)       es wird keine auswertbare Signalsequenz empfangen.

Die Zahlenwerte betreffen, wie ersichtlich, jeweils die Datenübertragungsrate in Gbit/s, mit welcher eine Testsequenz (TS) oder eine Abschlusssequenz (AS) von dem jeweiligen Endpunkt 1, 2 (A, B) ausgesendet wird.

Demgemäß vollzieht entsprechend dem Beispiel der Tabelle 1, gesteuert durch das in den Steuereinheiten der Endpunkte 1, 2 (A, B) gehaltene Regelwerk, folgendes. Bis zum Schritt X senden die Endpunkte 1, 2 (A, B) eine, zumindest bezogen auf den jeweiligen Schritt, jeweils identische Testsequenz aus. Da bis zu diesem Schritt von den Empfängerkomponenten der Endpunkte 1, 2 (A, B) - wie sich aus einem durch die Steuereinheit der Endpunkte 1, 2 (A, B) durchgeführten Vergleich ergibt - stets eine mit der ausgesendeten Testsequenz identische Signalsequenz empfangen wird und somit die Datenübertragungsrate für einen gesicherten Empfang (auch später zu übertragender Nutzdaten) noch nicht zu hoch war, wurde die Datenübertragungsrate in den vorangegangen (nicht gezeigten) Sendevorgängen (beginnend von ihrem Minimalwert von beispielsweise 100 Gbit/s) schrittweise um jeweils 100 Gbit/s erhöht.

Entsprechendes geschieht auch noch im Schritt X + 1, wobei aber die Empfangskomponenten des Endpunktes 2 (B) - anders als die des Endpunktes 1 (A) - bei diesem Schritt, also während des Zeitraums des Aussendens einer Testsequenz von 700 Gbit/s keine auswertbare Signalsequenz mehr empfangen. Daher wird durch den Endpunkt 2 (B) die Datenübertragungsrate im darauffolgenden Sendevorgang (Schritt x + 2) wieder auf den vorhergehenden Wert von 600 Gbit/s verringert. Zudem sendet der Endpunkt 2 (B) mit dieser Übertragungsrate keine Testsequenz TS mehr aus, sondern eine Abschlusssequenz AS, um zu signalisieren, dass die Datenübertragungsrate von 600 Gbit/s die aus "seiner Sicht" höchstmögliche, das heißt noch einen sicheren Empfang später zu übertragender Nutzdaten gewährleistende Datenübertragungsrate für den hinsichtlich der Datenübertragungsrate einzustellenden Pfadabschnitt 3 des neu aufgesetzten (restaurierten) Übertragungspfades ist.

Die Datenübertragungsrate von 600 Gbit/s und die Art der Signalsequenz (Abschlusssequenz) behält der Endpunkt 2 (B) entsprechend dem Regelwerk im Folgenden (hier nur noch ein Schritt, nämlich x + 3) bei. Da die Empfangskomponenten des Endpunkts 1 (A) im Schritt x + 2 eine Abschlusssequenz AS mit einer Datenübertragungsrate von 600 Gbit/s empfangen haben, obwohl die (lokalen) Sendekomponenten desselben Endpunktes 1 (A) gleichzeitig eine Testsequenz TS mit 800 Gbit/s aussenden, "weiß" der Endpunkt 1 (A), dass offenbar die für den Pfadabschnitt höchstmögliche Datenübertragungsrate gefunden wurde. Zur Bestätigung dessen sendet er beziehungsweise senden seine Sendekomponenten daher im darauffolgenden Schritt x + 3 ihrerseits die (nämlich dieselbe Abschlusssequenz die zuvor durch Endpunkt 2 [B] gesendet wurde) Abschlusssequenz mit 600 Gbit/s aus. Da diese nun auch durch den Endpunkt 2 (B) empfangen wird, ist der Einstellvorgang beendet. Nutzdaten können anschließend in dem Pfadabschnitt 3, also innerhalb des Kernnetzes zwischen den Endpunkten 1 (A) und 2 (B) mit 600 Gbit/s übertragen werden.

Wie erkennbar ist, geht der vorstehend erläuterte Ablauf davon aus, dass sich die Gegebenheiten in dem Pfadabschnitt 3 zwischen den Endpunkten 1, 2 (A, B) in beiden Übertragungsrichtungen - wie dies in der Praxis möglicherweise häufiger anzutreffen sein wird - geringfügig voneinander unterscheiden. Sollte es aber abweichend davon so sein, dass in beiden Übertragungsrichtungen eine Übertragung mit einer Datenübertragungsrate von 600 Gbit/s möglich, jedoch mit einer Datenübertragungsrate von 700 Gbit/s unmöglich ist, so würden beide Endpunkte 1, 2 (A, B) im Schritt x + 2 eine Abschlusssequenz (AS) mit 600 Gbit/s aussenden und empfangen. Der Iterationsprozess wäre dann etwas schneller beendet. Für den Fachmann wird unmittelbar erkennbar, dass sich der in der Tabelle 1 veranschaulichte Ablauf unter Berücksichtigung der dazu vorstehend gegebenen Erläuterungen in einem System respektive in den mit einer Verarbeitungseinheit ausgestatteten, die Endpunkte 1, 2 (A, B) ausbildenden Netzelementen ohne Weiteres in der Form eines in zugehörigen Speichermitteln zu hinterlegenden Regelwerks implementieren lässt.

Die Tabelle 2 veranschaulicht einen vergleichbaren Ablauf, wobei sich die beiden Endpunkte 1, 2 (A, B) von einem Maximalwert für die Datenübertragungsrate, nämlich ausgehend von beispielsweise 1.000 Gbit/s, an die letztlich einzustellende Datenübertragungsrate durch wiederholte Verringerung der Datenübertragungsrate herantasten. Auch hierbei ist auf die Darstellung der ersten Schritte, bei welchen es sich um die Aussendung einer Testsequenz mit einer zunächst noch eindeutig zu hohen Datenübertragungsrate (beide Endpunkte 1, 2 [A, B] empfangen keine für sie sinnvollen Signalsequenzen) handelt, verzichtet worden. Auch das in der Tabelle 2 veranschaulichte Ausführungsbeispiel geht davon aus, dass die letztlich einzustellende Datenübertragungsrate bei 600 Gbit/s gefunden wird. Der Ablauf gestaltet sich gemäß der nachfolgenden Tabelle 2.

Tabelle 2

| Schritt | Endpunkt 1 (Endpunkt A) | | Endpunkt 2 (Endpunkt B) | |
|---|---|---|---|---|
| | sendet | empfängt | sendet | empfängt |
| • | • | | • | |
| • | • | | • | |
| • | • | | • | |
| x | sendet empfängt | TS 800 Gbit/s (-) | sendet empfängt | TS 800 Gbit/s (-) |
| x + 1 | sendet empfängt | TS 700 Gbit/s TS 700 Gbit/s | sendet empfängt | TS 700 Gbit/s (-) |
| x + 2 | sendet empfängt | AS 700 Gbit/s TS 600 Gbit/s | sendet empfängt | TS 600 Gbit/s (-) |
| x + 3 | sendet empfängt | AS 600 Gbit/s TS 500 Gbit/s | sendet empfängt | TS 500 Gbit/s AS 600 Gbit/s |
| x + 4 | sendet empfängt | AS 500 Gbit/s AS 600 Gbit/s | sendet empfängt | AS 600 Gbit/s AS 500 Gbit/s |
| x + 5 | sendet empfängt | AS 600 Gbit/s AS 600 Gbit/s | sendet empfängt | AS 600 Gbit/s AS 600 Gbit/s |

Wie ersichtlich, wird bei dieser Variante die Datenübertragungsrate für die zunächst ausgesendete Testsequenz TS von einem jeweiligen Endpunkt 1, 2 (A, B) ausgehend vom Maximalwert (1000 Gbit/s) nach jedem Sendevorgang, bei welchem der betreffende Endpunkt 1, 2 (A, B) keine für ihn erkennbare beziehungsweise mit der ausgesendeten Testsequenz TS übereinstimmende Signalsequenz empfängt, für den darauf folgenden Sendevorgang um 100 Gbit/S reduziert. Gemäß dem Regelwerk gewissermaßen ein Abbruchkriterium stellt der Sendevorgang (Schritt x + 4) dar, bei dem ein Endpunkt (nämlich wiederum der Endpunkt 2 [B]) gemäß den Regeln die ausgesendete Signalsequenz gegenüber dem vorhergehenden Sendevorgang sowohl hinsichtlich ihrer Datenübertragungsrate als auch ihrer Art (der Endpunkt 2 [B] sendet nunmehr erstmals eine Abschlusssequenz aus) verändert. Die entsprechenden Parameter (Datenübertragungsrate und Art der Sequenz = Abschlusssequenz) behält er wiederum im Folgenden bei, bis er von dem Endpunkt 1 (A), in Form des Empfangs einer sowohl hinsichtlich der Datenübertragungsrate als auch der Art identischen Signalsequenz (AS), eine Bestätigung erhält. Nutzdaten können anschließend in dem Pfadabschnitt, also innerhalb des Kernnetzes zwischen den Endpunkten 1 (A) und 2 (B) mit 600 Gbit/s übertragen werden.

**Patentansprüche**

1.  Verfahren zur Einstellung der Datenübertragungsrate für die Übertragung von Nutzdaten über einen Übertragungspfad in einem Weitverkehrsnetz, gemäß welchem die Datenübertragungsrate für einen, zwei durch Netzelemente ausgebildete Endpunkte (1, 2) innerhalb eines optischen Kernnetzes miteinander verbindenden Pfadabschnitt (3) des Übertragungspfades automatisiert in einem iterativen Prozess zwischen einem Minimalwert und einem Maximalwert eingestellt wird, zur Festlegung eines Arbeitspunktes, bei dem eine das sichere Erkennen von einem Sender eines der Endpunkte (1, 2) ausgesendeter Nutzsignale durch einen diese empfangenden Empfänger des jeweils anderen Endpunkts (1, 2) gewährleistende Datenübertragung mit einer hohen, in beiden Übertragungsrichtungen identischen Datenübertragungsrate ermöglicht wird, wobei die die Endpunkte (1, 2) ausbildenden Netzelemente, deren Zusammenwirken durch ein Netzmanagementsystem (4) gesteuert wird, jeweils mit einer Steuereinheit und mit Sende- und Empfangseinheiten aufweisenden FlexRate-Schnittstellen, nämlich mit Schnittstellen mit einer variabel einstellbaren Datenübertragungsrate, ausgestattet sind, aber die für den Pfadabschnitt (3) einzustellende Datenrate in dem iterativen Prozess ohne Einbeziehung des Netzmanagementsystems (4) lokal zwischen dessen Endpunkten (1, 2) ausgehandelt wird, **dadurch gekennzeichnet, dass**

a.) bei einem ersten zeitsynchronen Sendevorgang von beiden Endpunkten (1, 2) eine identische Testsequenz mit gleicher Datenübertragungsrate ausgesendet wird und

b.) bei nachfolgenden zeitsynchronen Sendevorgängen von einem jeweiligen Endpunkt (1, 2) eine sich gemäß einer Regel des Regelwerks gegenüber der jeweils zuvor ausgesendeten Signalsequenz hinsichtlich ihrer Datenübertragungsrate oder/und ihrer Art unterscheidende Signalsequenz ausgesendet wird, bei der es sich entweder erneut um eine Testsequenz oder um eine Abschlusssequenz handelt und welche in Abhängigkeit eines Vergleichs der vom jeweils selben Endpunkt (1, 2) während des vorhergehenden Sendevorgangs ausgesendeten mit den von ihm empfangenen Signalen und einer dabei erfolgenden Prüfung, ob die von dem jeweiligen Endpunkt (1, 2) ausgesendete Signalsequenz aus der von demselben Endpunkt (1, 2) empfangenen Signalsequenz rekonstruierbar ist, gemäß der vorgenannten Regel bestimmt wird, und

c.) von einem Endpunkt (1, 2), der eine sowohl hinsichtlich der Datenübertragungsrate als auch hinsichtlich der Art gegenüber der Signalsequenz des vorhergehenden Sendvorgangs veränderte Signalsequenz, nämlich die Abschlusssequenz ausgesendet hat, diese Signalsequenz solange wiederholt in nachfolgenden Sendevorgängen unverändert ausgesendet wird, bis durch ihn die sowohl hinsichtlich ihrer Datenübertragungsrate als auch ihrer Art identische Signalsequenz von dem anderen Endpunkt (1, 2) empfangen wird, und

d.) die Datenübertragungsrate der Signalsequenz gemäß dem die Iteration beendenden Schritt c.) die Datenübertragungsrate ist, mit der in dem Pfadabschnitt (3) innerhalb des Kernnetzes nachfolgend Nutzdaten über den Übertragungspfad übertragen werden.

2. Verfahren nach Anspruch 1, **dadurch gekennzeichnet, dass** die Datenübertragungsrate für den Pfadabschnitt (3) innerhalb des Kernnetzes eingestellt wird im Zusammenhang mit einer nach einer Unterbrechung des Übertragungspfades im Kernnetz erfolgenden optical restoration, bei welcher zunächst der Pfadabschnitt (3) als neuer Pfad durch das Kernnetz ermittelt, die Konnektivität in dem Pfadabschnitt (3) hergestellt und die Endpunkte (1, 2) für den Beginn des iterativen Prozesses zur Ermittlung der zur Übertragung von Nutzdaten einzustellenden Datenübertragungsrate zueinander synchronisiert werden.

3. Verfahren nach Anspruch 2, **dadurch gekennzeichnet, dass** die Synchronisierung der Endpunkte (1, 2) zur Ermöglichung der zeitsynchronen Aussendung der der Einstellung der Datenübertragungsrate dienenden Signalsequenzen ohne Einbeziehung des Netzmanagementsystems (4), mittels Synchronisierungssequenzen, nämlich dazu zwischen den Endpunkten (1, 2) übertragener spezieller Signalsequenzen erfolgt.

4. Verfahren nach Anspruch 1, **dadurch gekennzeichnet, dass** das jeweils zeitsynchrone wiederholte Aussenden einer Signalsequenz mit dem Aussenden einer identischen Testsequenz mit einer dem Minimalwert entsprechenden Datenübertragungsrate durch beide Endpunkte (1, 2) beginnt und dass die Datenübertragungsrate bei nachfolgenden Sendevorgängen, bezüglich der Datenübertragungsrate der von dem jeweils selben Endpunkt (1, 2) im vorhergehenden Sendevorgang ausgesendeten Signalsequenz, jeweils in äquidistanten Schritten verändert wird, wobei die Datenübertragungsrate durch die Sendekomponenten beider Endpunkte (1, 2) zumindest bis zum letztmaligen Aussenden einer Testsequenz erhöht wird.

5. Verfahren nach Anspruch 1, **dadurch gekennzeichnet, dass** das jeweils zeitsynchrone wiederholte Aussenden einer Signalsequenz mit dem Aussenden einer identischen Testsequenz mit einer dem Maximalwert entsprechenden Datenübertragungsrate durch beide Endpunkte (1, 2) beginnt und dass die Datenübertragungsrate bei nachfolgenden Sendevorgängen, bezüglich der Datenübertragungsrate der von dem jeweils selben Endpunkt (1, 2) im vorhergehenden Sendevorgang ausgesendeten Signalsequenz, jeweils in äquidistanten Schritten verändert wird, wobei die Datenübertragungsrate durch die Sendekomponenten beider Endpunkte (1, 2) zumindest bis zum letztmaligen Aussenden einer Testsequenz verringert wird.

6. Verfahren nach Anspruch 1, **dadurch gekennzeichnet, dass** das jeweils zeitsynchrone wiederholte Aussenden einer Signalsequenz mit dem Aussenden einer identischen Testsequenz beginnt, welche von beiden Endpunkten (1, 2) mit der gleichen, dem Minimalwert oder dem Maximalwert entsprechenden Datenübertragungsrate ausgesendet wird und dass Änderungen der Datenübertragungsrate bezüglich der Datenübertragungsrate der jeweils im vorhergehenden Sendevorgang ausgesendeten Signalsequenz unter Anwendung eines Bisektionsverfahrens erfolgen, wobei die Datenübertragungsrate einer durch einen jeweiligen Endpunkt (1, 2) ausgesendeten Signalsequenz, beginnend mit einer ersten Schrittweite, jeweils mit der gegenüber dem Betrag ihrer letzten Änderung durch denselben Endpunkt (1, 2) hälftigen Schrittweite erhöht oder verringert wird.

7. Verfahren nach Anspruch 1, **dadurch gekennzeichnet, dass** die Datenübertragungsrate in dem automatisierten Ablauf für einen Pfadabschnitt (3) zwischen zwei, jeweils durch Label Switch Router mit einer FlexRate-Schnittstelle ausgebildeten Endpunkten (1, 2) des optischen Kernnetzes eingestellt wird.

**Claims**

1. Method for adjusting the data transmission rate for the transmission of payload data via a transmission path in a wide area network, according to which the data transmission rate for a path section (3) of the transmission path that interconnects two endpoints (1, 2), formed by network elements, within an optical core network is adjusted between a minimum value and a maximum value in automated fashion in an iterative process, for the purpose of stipulating an operating point, in which a data transmission ensuring the reliable detection of a transmitter of one of the endpoints (1, 2) of transmitted payload signals by a receiver, which receives said payload signals, of the respective other endpoint (1, 2) is made possible at a high data transmission rate that is identical in both transmission directions, wherein the network elements that form the endpoints (1, 2), the interaction of which network elements is controlled by a network management system (4), are each equipped with a control unit and with FlexRate interfaces, namely with interfaces with a variably adjustable data transmission rate, having transmitting and receiving units, but the data rate to be adjusted for the path section (3) is negotiated locally between the endpoints (1, 2) of the network management system (4) in the iterative process without the involvement of said network management system, **characterized in that**

   a.) a first synchronous transmission operation involves both endpoints (1, 2) transmitting an identical test sequence at the same data transmission rate, and

   b.) subsequent synchronous transmission operations involve a respective endpoint (1, 2) transmitting a signal sequence that differs, according to a rule from the set of rules, from the respective previously transmitted signal sequence in terms of its data transmission rate and/or its type and that is either a test sequence again or a concluding sequence and that is determined according to the aforementioned rule on the basis of a comparison of the signals that are transmitted by the same respective endpoint (1, 2) during the preceding transmission operation with the signals received by said endpoint and a check, taking place at that time, to determine whether the signal sequence transmitted by the respective endpoint (1, 2) is reconstructable from the signal sequence received by the same endpoint (1, 2), and

   c.) an endpoint (1, 2) that has transmitted a signal sequence that is altered in comparison with the signal sequence of the preceding transmission operation both in terms of data transmission rate and in terms of type, namely the concluding sequence, repeatedly transmits this signal sequence without alteration in subsequent transmission operations until said endpoint receives the identical signal sequence, in terms of both its data transmission rate and its type, from the other endpoint (1, 2), and

   d.) the data transmission rate of the signal sequence according to step c.), which terminates the iteration, is the data transmission rate at which payload data are subsequently transmitted via the transmission path in the path section (3) within the core network.

2. Method according to Claim 1, **characterized in that** the data transmission rate for the path section (3) within the core network is adjusted in association with an optical restoration taking place after an interruption to the transmission path in the core network, which optical restoration first involves the path section (3) being determined as a new path through the core network, the connectivity in the path section (3) being set up and the endpoints (1, 2) being synchronized to one another for the start of the iterative process for the purpose of determining the data transmission rate to be set for transmitting payload data.

3. Method according to Claim 2, **characterized in that** the endpoints (1, 2) are synchronized to allow the synchronous transmission of the signal sequences used for setting the data transmission rate without the involvement of the network management system (4), by means of synchronization sequences, namely special signal sequences transmitted between the endpoints (1, 2) for this purpose.

4. Method according to Claim 1, **characterized in that** the respective synchronous repeated transmission of a signal sequence starts with the transmission of an identical test sequence at a data transmission rate corresponding to the minimum value by both endpoints (1, 2), and **in that** the data transmission rate for subsequent transmission operations is altered, in terms of the data transmission rate of the signal sequence transmitted by the same respective endpoint (1, 2) in the preceding transmission operation, in respective equidistant steps, wherein the data transmission rate is increased by the transmission components of both endpoints (1, 2) at least up until a test sequence is transmitted for the last time.

5. Method according to Claim 1, **characterized in that** the respective synchronous repeated transmission of a signal sequence starts with the transmission of an identical test sequence at a data transmission rate corresponding to the maximum value by both endpoints (1, 2), and **in that** the data transmission rate for subsequent transmission operations is altered, in terms of the data transmission rate of the signal sequence transmitted by the same respective endpoint (1, 2) in the preceding transmission operation, in respective equidistant steps, wherein the data transmission rate is reduced by the transmission components of both endpoints (1, 2) at least up until a test sequence is transmitted for the last time.

**6.** Method according to Claim 1, **characterized in that** the respective synchronous repeated transmission of a signal sequence starts with the transmission of an identical test sequence that is transmitted by both endpoints (1, 2) at the same data transmission rate corresponding to the minimum value or the maximum value, and **in that** changes to the data transmission rate in relation to the data transmission rate of the respective signal sequence transmitted in the preceding transmission operation are made by applying a bisection method, wherein the data transmission rate of a signal sequence transmitted by a respective endpoint (1, 2) is increased or reduced in each case with half the step size, beginning with a first step size, in comparison with the absolute value of its last change by the same endpoint (1, 2).

**7.** Method according to Claim 1, **characterized in that** the data transmission rate is set in the automated procedure for a path section (3) between two endpoints (1, 2) of the optical core network that are each formed by label switch routers with a FlexRate interface.

**Revendications**

**1.** Procédé de réglage du débit de transmission de données pour la transmission de données utiles par l'intermédiaire d'un chemin de transmission dans un réseau étendu, selon lequel le débit de transmission de données pour une section de chemin (3) du chemin de transmission reliant entre eux deux points d'extrémité (1, 2) formés par des éléments de réseau au sein d'un réseau optique central est réglé automatiquement, lors d'un processus itératif, entre une valeur minimale et une valeur maximale, afin de définir un point de fonctionnement, dans lequel une transmission de données est rendue possible avec un débit de transmission de données élevé qui est identique dans les deux directions de transmission et qui assure la reconnaissance fiable de signaux utiles transmis par un émetteur de l'un des points d'extrémité (1, 2), par un récepteur de l'autre point d'extrémité respectif (1, 2) qui reçoit ces signaux, dans lequel les éléments de réseau formant les points d'extrémité (1, 2), dont l'interaction est commandée par un système de gestion de réseau (4), sont respectivement équipés d'une unité de commande et d'interfaces FlexRate comportant des unités d'émission et de réception, à savoir des interfaces ayant un débit de transmission de données réglable de manière variable, mais le débit de données devant être réglé pour la section de chemin (3) est négocié localement entre ses points d'extrémité (1, 2) lors du processus itératif sans impliquer le système de gestion de réseau (4), **caractérisé en ce que**

a.) lors d'un premier processus de transmission synchrone dans le temps, une séquence de test identique est transmise par les deux points d'extrémité (1, 2) avec le même débit de transmission de données et

b.) lors de processus de transmission synchrones dans le temps suivants par un point d'extrémité respectif (1, 2), une séquence de signal qui, conformément à une règle du jeu de règles, diffère de la séquence de signal respective précédemment transmise en ce qui concerne son débit de transmission de données et/ou son type est transmise, laquelle est soit à nouveau une séquence de test, soit une séquence de terminaison qui est déterminée conformément à la règle susmentionnée en fonction d'une comparaison des signaux transmis par le même point d'extrémité (1, 2) au cours de la transmission précédente avec les signaux reçus par celui-ci et d'une vérification ainsi effectuée pour déterminer si la séquence de signal transmise par le point d'extrémité respectif (1, 2) peut être reconstruite à partir de la séquence de signal reçue par le même point d'extrémité (1, 2), et

c.) la séquence de signal est transmise de manière répétée, sans modification, par un point d'extrémité (1, 2) qui a transmis une séquence de signal dont le débit et le type ont changé par rapport à la séquence de signal du processus de transmission précédent, à savoir la séquence de terminaison, jusqu'à ce que la séquence de signal, identique tant du point de vue du débit que du type, soit reçue par au travers de celui-ci par l'autre point d'extrémité (1, 2), et

d.) le débit de transmission de données de la séquence de signal selon l'étape c.) mettant fin à l'itération est le débit de transmission de données avec lequel les données utiles sont ensuite transmises sur le chemin de transmission dans la section de chemin (3) au sein du réseau central.

**2.** Procédé selon la revendication 1, **caractérisé en ce que** le débit de transmission de données pour la section de chemin (3) au sein du réseau central est réglé en association avec une restauration optique, effectuée après une interruption du chemin de transmission dans le réseau central, lors de laquelle, la section de chemin (3) est d'abord déterminée comme étant un nouveau chemin au travers du réseau central, la connectivité est établie dans la section de chemin (3) et les points d'extrémité (1, 2) sont synchronisés entre eux pour le début du processus itératif destiné à déterminer le débit de transmission de données devant être réglé pour la transmission de données utiles.

3. Procédé selon la revendication 2, **caractérisé en ce que** la synchronisation des points d'extrémité (1, 2) destinée à permettre la transmission synchrone dans le temps des séquences de signal servant à régler le débit de transmission de données sans impliquer le système de gestion de réseau (4) est effectuée au moyen de séquences de synchronisation, à savoir de séquences de signal spéciales transmises à cet effet entre les points d'extrémité (1, 2).

4. Procédé selon la revendication 1, **caractérisé en ce que** la transmission répétée respectivement synchrone dans le temps d'une séquence de signal commence par la transmission d'une séquence de test identique avec un débit de données correspondant à la valeur minimale par les deux points d'extrémité (1, 2) et **en ce que** le débit de transmission de données lors de processus de transmission suivants est respectivement modifié par pas équidistants par rapport au débit de transmission de données de la séquence de signal transmise par le même point d'extrémité (1, 2) respectif lors du processus de transmission précédent, dans lequel le débit de transmission de données est augmenté par les composants de transmission des deux points d'extrémité (1, 2) au moins jusqu'à la dernière transmission d'une séquence de test.

5. Procédé selon la revendication 1, **caractérisé en ce que** la transmission répétée respectivement synchrone dans le temps d'une séquence de signal commence par la transmission d'une séquence de test identique avec un débit de transmission de données correspondant à la valeur maximale par les deux points d'extrémité (1, 2) et **en ce que** le débit de transmission de données lors de processus de transmission suivants est respectivement modifié par pas équidistants par rapport au débit de transmission de données de la séquence de signal transmise par le même point d'extrémité (1, 2) respectif lors du processus de transmission précédent, dans lequel le débit de transmission de données est réduit par les composants de transmission des deux points d'extrémité (1, 2) au moins jusqu'à la dernière transmission d'une séquence de test.

6. Procédé selon la revendication 1, **caractérisé en ce que** la transmission répétée respectivement synchrone dans le temps d'une séquence de signal commence par la transmission d'une séquence de test identique, qui est transmise par les deux points d'extrémité (1, 2) avec le même débit de transmission de données correspondant à la valeur minimale ou à la valeur maximale et **en ce que** des modifications du débit de transmission de données par rapport au débit de transmission de données de la séquence de signal respectivement transmise lors du processus de transmission précédent sont effectuées par application d'un procédé de bissection, dans lequel le débit de transmission de données d'une séquence de signal transmise par un point d'extrémité respectif (1, 2) est augmenté ou réduit, en commençant par une première taille de pas, avec une taille de pas respectivement égale à la moitié de la valeur de sa dernière modification par le même point d'extrémité (1, 2).

7. Procédé selon la revendication 1, **caractérisé en ce que** le débit de transmission de données est réglé lors du traitement automatisé pour une section de chemin (3) entre deux points d'extrémité (1, 2) du réseau central optique respectivement formés par des routeurs à commutation d'étiquettes ayant une interface FlexRate.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FRED BUCHALI ; LAURENT SCHMALEN ; KARSTEN SCHUH ; WILFRIED IDLER.** Optimization of Time-Division Hybrid-Modulation and its Application to Rate Adaptive 200Gb Transmission. *The European Conference on Optical Communication (ECOC) 2014, IEEE Conference Publications*
- Evaluation of Technology Options for Software-Defined Transceivers in Fixed WDM Grid versus Flexible WDM Grid Optical Transport Networks. **A. AUTENRIETH ; J.-P. ELBERS ; M. EISELT ; K. GROBE ; B. TEIPEN ; H. GRIEßER.** ITG-Fachbericht 241: Photonische Netze. VDE Verlag GmbH, 2013

- Rate-Adaptive Modulation and Coding for Optical Fiber Transmission Systems. **GWANG-HYUN GHO et al.** JOURNAL OF LIGHTWAVE TECHNOLOGY. IEEE SERVICE CENTER, NEWYORK, 01. Juni 2012, vol. 30, 1818-1828
- Flexrate technology for multilayer interworking: The practical benefit of time-granular rate adaptively in aggregation networks. **GUNKEL et al.** INTERNATIONAL CONFERENCE ON PHOTONICS IN SWITCH-ING (PS), IEE. 22. September 2015